# EUROPEAN PATENT APPLICATION

(11) **EP 1 473 502 A1**
(43) Date of publication of application: **03.11.2004**
(21) Application number: 03076317.1
(22) Date of filing: 02.05.2003
(51) Int. Cl.: F16L 9/147, F16L 55/165

(54) **A pipe with an internal coating**

(71) Applicant: ALSTOM Power FlowSystems A/S, 7000 Fredericia (DK)
(72) Inventor: Nielsen, Lars Valentin, 7000 Fredericia (DK)
(74) Representative: Brock-Nannestad, George

(57) **Abstract**

A pipe (1, 2, 3, 4) is constructed with an internal diffusion barrier coat in the form of a laminate (2, 3, 4) comprising a metal layer (3) in e.g. aluminium. Processes for the manufacture are described, which ensure the welding of the laminate to the inside of the pipe. Thereby a pipe is obtained that is suitable for the transportation of media and as an outer casing for insulated pipes

## Description

It is a characteristic of pipes for liquids and gases that it is desired to prevent a loss of liquid or gas through the pipe wall, or the converse, to prevent the pollution of the content by chemical substances, such as oxygen, which penetrate the wall from the outside. It is known to construct pipes as a multi-layer construction, in which a diffusion barrier in the form of a metal foil is fitted to an internal carrier pipe, usually by winding, whereupon this laminated construction is surrounded by a protective casing. For use in insulating pipes constructions are known, in which the end result is a pipe with a diffusion barrier, but it is integrated with the insulating foam, which is in intimate contact with a pressure pipe on the inside. Such a pre-insulated bonded pipe is described in EP 84 088, in which the diffusion barrier is provided as a layer between an outer casing and the inner insulating layer. In such constructions one is completely tied to the choice of insulating materials and their ability to press the diffusion barrier tightly against the outer layer, and one is hence in practice limited to that type of insulation that expands as a foam during manufacture. There is hence a need for an outer casing, which is provided with a diffusion barrier on the inside beforehand, without having a carrier pipe that constitutes a limitation in the lumen of the pipe and an increase in its weight.

Such a pipe ia obtained according to the invention, which is particular in that it comprises a welded layer of a metal laminate on the inside.

According to a preferred embodiment the metal laminate displays a three-layer construction with an aluminium foil in the middle, with a thermoplastic layer suitable for welding to the pipe and a thermoplastic or thermosetting layer suitable for efficient adhesion to e.g. a foamed insulating material. Typically the thermoplastic layer would be polyethylene and the inner layer polyester.

A procedure for the manufacture of a pipe of the type described is particular in that the pipe, in a predetermined length, has a cylindrically folded foil consisting of a laminate placed inside it, that a radially elastic mandrel element is pulled through the cylindrically folded foil to press the foil outwards against the inside of the pipe, that a ring-shaped heating is provided at essentially the same axial position, in order that the outer layer of the metal laminate is welded to the inside of the pipe. By means of the local but circumferentially even heating a continuous welding will occur between the outer layer of the laminate and the inside of the pipe. Any internally or externally localised source of heat may be used in conjunction with a mandrel, provided the melting and hence the welding becomes complete.

In a preferred procedure the heating occurs by an induction heating coil placed at the outside and concentrically to the mandrel element, and the energy supply to the induction heating coil is chosen such that the heat generated in the aluminium layer welds the outer layer of the metal laminate to the inside of the pipe. It will be obvious that it is not essential to the mechanism, how the relative movement between the welding station and the pipe is obtained. Hence a stationary pipe may be used, and the mandrel and induction heating coil are displaced axially, or fixed apparatus consisting of a fixed mandrel and a fixed induction heating coil may have means for transporting a pipe that is to be provided with a coat.

In a further preferred procedure of the invention the heating of the laminate is provided by the mandrel itself, and the welding is continuously obtained during the passage of the mandrel through the pipe.

In a further preferred procedure the welding is performed by heating of a ring-shaped heating zone fitted in the mandrel. Hereby it is obtained that the front part of the mandrel performs the pressing against the inside of the pipe, the heating zone performs the necessary melting, and the rear part of the mandrel performs a calibration and ensures contact during the setting of the melted zone,

A further preferred procedure is particular in that a laminate is used, in which the innermost layer is thermoplastic with a melting point which is higher than that of the outermost layer.

A further advantageous procedure for the manufacture of a pipe of the type described is particular in that a laminated foil unwound from a storage roll is folded to a lengthwise cylindrical shape and is fed to an extruder, which by means of a ring-shaped slit extrudes casing material around the lengthwise cylindrical laminated foil, while an internal support mandrel fitted at a short axial distance from the ring-shaped slit calibrates the inner diameter of the finished pipe. The hot casing material will perform a continuous welding to the outer layer of the laminated foil.

According to a further advantageous procedure an outside ring-shaped vacuum head in conjunction with the extruder performs a calibration of the outer diameter, whereby the inner support mandrel has an outer surface at the same axial position that ensures a good contact between the foil and the hot casing material.

The invention will be described in greater detail with reference to the drawing, in which
Fig. 1 shows the construction of a pipe according to the invention,
Fig. 2 shows the principle for a first plant for the manufacture of a pipe according to the invention, and
Fig. 3 shows the principle for a second plant for the manufacture of a pipe according to the invention.

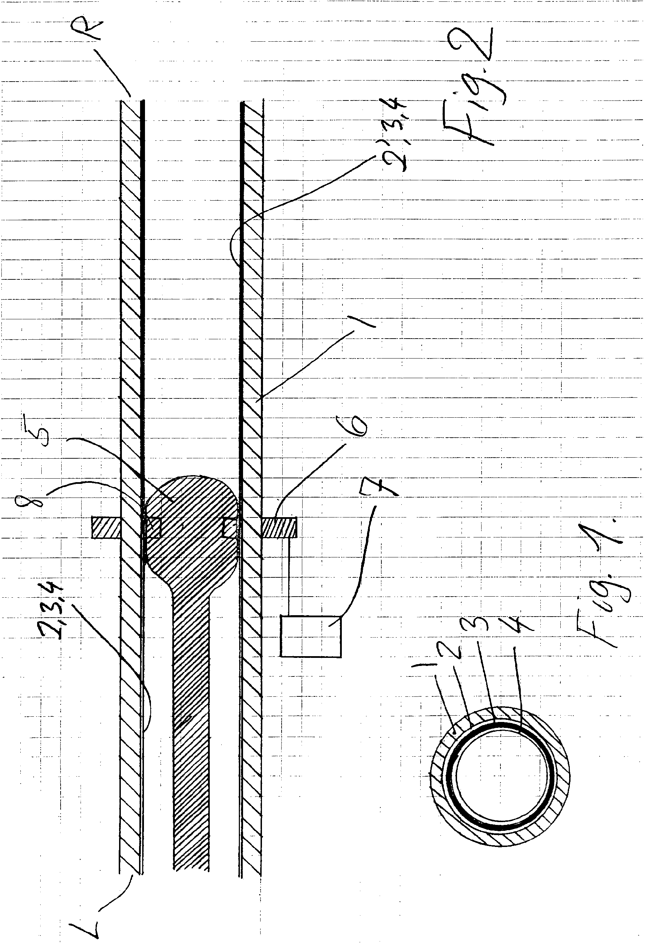

In Fig. 1 is seen a cross section of a pipe according to an embodiment of the invention, with an exaggerated thickness of the inner layers. We see an outer pipe of a polymer 1, preferably polyethylene, to which is welded the outer layer 2 of a previously manufactured laminate consisting of said layer 2, consisting of polyethylene with a melting point suitable for welding to the outer pipe, a layer 3, which is an aluminium layer, which constitutes the diffusion barrier proper, and an inner layer 4, which may be thermosetting, such as polyester, or thermoplastic, but having a melting point which is higher than the melting point of the layer 2. In case the pipe is to be used as the casing for thermally insulated pipe using e.g. PUR foam, the material for the inner layer 4 must be chosen such that a good adherence to the foam insulation is obtained.

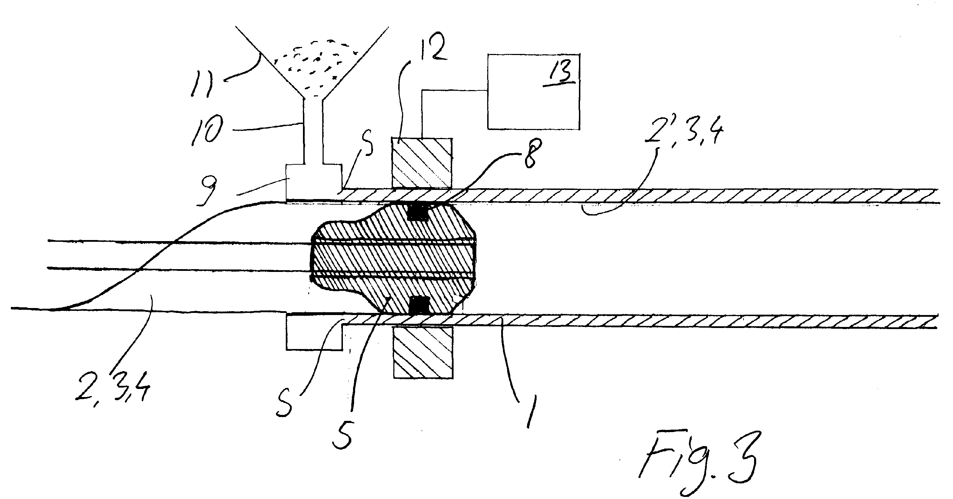

In Fig. 2 is seen a schematic representation of a part of a plant for the manufacture of a pipe by means of a procedure according to the invention. A pipe 1 which has been cut to a pre-determined length has had a folded diffusion barrier 2, 3, 4 put inside. A mandrel 5 is put through the pipe at the beginning, until it is placed at the right end R of the pipe. Concentrically to the mandrel 5 there is placed an induction coil 6, which is supplied with current from a source of current 7. It may be low frequency, ultrasound frequencies, or even microwaves, in which case the coil 6 must be replaced by a suitable wave guide. The mandrel is pulled through the pipe simultaneously with the induction coil 6 being pulled along the length of the pipe 1. Thereby the layer 2, 3, 4 is left welded to the inside of the pipe, because the layer 2 has welded to the inside of the pipe to create the internal layer 2', 3, 4. When the mandrel and the induction coil have reached the left end L of the pipe 1, the pipe is completed.

It is also shown that there may be a supply of power, e.g. in the form of a ring-shaped resistive heating element 8 built into the mandrel 5 itself. To this end the mandrel is provided with a surface that does not adhere to the inner layer 4 despite the heating.

In Fig. 3 is shown a schematic representation of a part of a plant for the manufacture of a pipe by a different procedure according to the invention. In this case the diffusion barrier 2, 3, 4 is folded into a tubular shape, which is supplied to an extruder 9 with a ring-shaped slit S. Granulate is brought from the raw materials bin 11 via heating and a screw conveyor 10 and is extruded in the form of the pipe 1. This is calibrated on the inside by means of the mandrel 5, which has a ring-shaped heating zone 8 and presses the diffusion barrier against the pipe 1. This, however, is still soft and is hence controlled by a vacuum head 12 that has a vacuum line to a pump 13. Hereby the laminate is welded to the inside of the pipe 1, and thus the desired pipe with a coating has been obtained. The advantage of this embodiment is that one is not limited to lengths corresponding to the mandrel that is pulled through the pipe as described above. The mandrel 5 is provided with a surface, which does not have a tendency to stick to the inside of the diffusion barrier, even though it is heated locally and ring-shaped from the inside. Such a surface may be obtained, either by means of a coat in e.g. a polytetrafluorethylene polymer or by a suitable combination of a coat of this kind and a suitable texturing of the surface. Furthermore there may be provided means in the rod for the transport of a gas under pressure for injection and cooling of the surface of the mandrel at or outside the ring-shaped area. There may hence be provided channels and/or orifices for this in the surface of the mandrel. In case a liquid coolant is used, the channels will not have orifices to the surface, and there is a requirement for channels for the return of heated coolant.

The necessary control circuits or ancillary installations are not shown in Figs. 2 and 3, however they will be obvious to the skilled person.

## Claims

1. A self-supporting pipe with an internal coat for the reduction of diffusion, **characterized in that** the internal coat is a welded laminate (2, 3, 4) comprising a metal foil (3).

2. A self-supporting pipe according to claim 1, **characterised in that** the laminate displays a three-layer construction with an aluminium foil in the middle, with a thermoplastic layer (2') suitable for welding to the pipe and a thermoplastic or thermosetting layer (4) suitable for efficient adhesion to e.g. a foamed insulating material.

3. A procedure for the manufacture of a pipe according to claim 1, **characterised in that** the pipe (1), in a predetermined length, has a cylindrically folded foil consisting of a laminate (2, 3, 4) placed inside it, that a radially elastic mandrel element (5) is pulled through the cylindrically folded foil to press the foil outwards against the inside of the pipe, that an induction heating coil (6) is transported at the outside at essentially the same axial position, that the energy supply to the induction heating coil is chosen such that the heat generated in the aluminium layer (3) welds the outer layer (2) of the laminate to the inside of the outer pipe.

4. A procedure for the manufacture of a pipe according to claim 1, **characterised in that** a laminated foil (2, 3, 4) unwound from a storage roll is folded to a lengthwise cylindrical shape and is fed to an extruder, which by means of a ring-shaped slit (S) extrudes casing material around the lengthwise cylindrical laminated foil, while an internal support mandrel (5) fitted at a short axial distance from the ring-shaped slit calibrates the inner diameter of the finished pipe.

5. A procedure for the manufacture of a pipe according to claim 4, **characterised in that** there is provided an outside ring-shaped vacuum head (12) in conjunction with the extruder, and the internal support mandrel obtains its calibrating effect at this location.

6. A use of a pipe according to claim 1, charecterised in that the pipe is used as the outer casing (1, 2, 3, 4) for pre-insulated pipes, e.g. for district heating.
